# EUROPEAN PATENT APPLICATION

(11) **EP 1 271 893 A1**
(43) Date of publication of application: **02.01.2003**
(21) Application number: 02705292.7
(22) Date of filing: 18.03.2002
(51) Int. Cl.: H04L 29/06

(54) **DATA COMMUNICATION APPARATUS**

(30) Priority: 28.03.2001 JP 2001094387; 26.02.2002 JP 2002050343
(71) Applicant: Sony Computer Entertainment Inc., Tokyo 107-0052 (JP)
(72) Inventor: HOSHINO, Masanori, SONY COMPUTER ENT. INC., Tokyo 107-0052 (JP); HONDA, Toshio, SONY COMPUTER ENT. INC., Tokyo 107-0052 (JP); SHIRAI, Takuya, SONY COMPUTER ENT. INC., Tokyo 107-0052 (JP)
(74) Representative: Müller, Frithjof E., Dipl.-Ing.
(86) International application number: JP0202544
(87) International publication number: WO02080495

(57) **Abstract**

When video game machines are connected to, for example, the Internet through portable communication devices, the difference of communication protocols and communication timings between the portable communication devices and the video game machines can be absorbed by buffer at connection cables which connect the portable communication devices and the video game machines.

## Description

### TECHNICAL FIELD

The present invention relates to data transmission devices, data transmission methods, data transmission systems, and computer-readable recording media having recorded therein data transmission programs for managing communication protocols and communication timings between specific electronic apparatus and portable communication devices to realize communications between the electronic apparatus and the portable communication devices.

### BACKGROUND ART

When perusing various Web sites or sending/receiving e-mails through a network such as the Internet, most users use their personal computers.

On the other hand, portable telephones connectable with the Internet or the like have appeared in recent years. The mainstream of communication systems for connecting such portable telephones with the Internet or the like is a system in which so-called PDC (Personal Digital Cellular) system has been extended so as to be usable in packet communications.

Many personal computers are provided with highly extensible communication ports that can be connected with portable telephones and the like as well as a public telephone network and a private network. Besides, many personal computers can substantially freely set the communication protocols for transmitting/receiving signals through their communication ports. Such a personal computer thus can connect with the Internet or the like through a portable telephone connected to the communication port.

Meanwhile, some recent users want to connect their own electronic apparatus such as television receivers or game machines, having a two-way communication function, with portable telephones so as to access Web sites or sending/receiving e-mails more easily. If a portable telephone can be connected with a communication port originally provided on such an electronic apparatus, the user can perform various operations such as accessing Web sites or preparing and sending/receiving e-mails, using an originally provided user interface device (e.g., an input/output device such as a remote controller and the like) connected to the communication port.

However, the existing communication port such an electronic apparatus provides is generally lower in extensibility than that of a personal computer. Besides, the existing communication port has been set for communications in a exclusive communication protocol at exclusive communication timings for the electronic apparatus. Therefore, in the case of connecting the existing communication port with a portable telephone, the electronic apparatus has need of processing for adjusting the communication protocol and timings of existing communication port with those of the portable telephone. For realizing such a process with the electronic apparatus, the user must exchange the signal processing unit in the electronic apparatus, or the user must send the electronic apparatus to a service center for rewriting its processing program.

If a new exclusive communication port connectable with a portable telephone is provided, the electronic apparatus can connect with the Internet through the exclusive communication port and the portable telephone. However, the provision of such a new exclusive communication port raise the cost of the electronic apparatus.

An object of the present invention is to provide data communication devices, data communication methods, data communication systems, recording media having recording therein the data communication programs, and data communication programs to be executed by computers, all of which make it possible to adjust the communication protocols and the communication timings of portable communication devices with those of electronic apparatus when the desired electronic devices are connected with a network such as the Internet through the portable communication devices such as portable telephone or the like.

### DISCLOSURE OF THE INVENTION

According to the present invention, first communication data serially supplied in first communication cycles using a first communication protocol is received, the first communication data is accumulated, and then the accumulated first communication data is converted by a second communication protocol into second communication data to be output.

The first communication data supplied from outside is received based on a first clock signal supplied from outside together with the first communication data. The accumulated first communication data is extracted based on a second clock signal.

Meanwhile, third communication data supplied from outside using the second communication protocol is received and accumulated based on second clock signal supplied from outside together with the third communication data. The accumulated third communication data is serially extracted based on the first clock signal supplied from outside. The third communication data is converted by the first communication protocol into fourth communication data to be output.

In short, according to the present invention, first communication data supplied from outside is converted into second communication data of the second communication protocol so as to be output at second communication timings. On the other hand, third communication data supplied from outside is converted into first communication data of the first communication protocol so as to be output at first communication timings.

### BRIEF DESCRIPTION OF THE DRAWINGS

FIG. 1 illustrates a general construction of an entertainment system;
FIG. 2 is a view of a connection cable;
FIG. 3 is a view of the connection cable from the lower side of the connection cable shown in FIG. 2;
FIG. 4 is a view of a controller port connector of the connection cable from the left side of the connection cable shown in FIG. 3;
FIG. 5 is a view of a portable device connector of the connection cable from the right side of the connection cable shown in FIG. 3;
FIG. 6 is a block circuit diagram illustrating a circuit configuration in a video game machine;
FIG. 7 is a timing chart illustrating timings for transmitting/receiving signals through an external-device connector of the portable telephone;
FIG. 8 illustrates the structure of a command that the portable telephone transmits/receives through the external-device connector;
FIG. 9 illustrates the structure of response data that the portable telephone transmits/receives through the external-device connector;
FIG. 10 is a timing chart illustrating timings for the transmitting/receiving signals through a controller port of the video game;
FIG. 11 is a block diagram for showing the outline construction of a signal processing unit incorporated in the controller port connector of the connection cable;
FIG. 12 illustrates region code commands;
FIG. 13 illustrates control commands of a CPU chip incorporated in the portable telephone;
FIG. 14 illustrates connector insertion and pull-out check commands;
FIG. 15 illustrates commands to be transmitted to/received from a CPU in the portable telephone;
FIG. 16 illustrates commands to be transmitted/received as up/down serial data between the signal processing unit and the CPU in the portable telephone;
FIG. 17 illustrates commands to be used for turning ON/OFF the mode of a communication protocol in a data link layer;
FIG. 18 illustrates commands for resetting the signal processing unit and clearing a buffer memory; and
FIG. 19 illustrates commands for transmitting/receiving up/down serial data.

### BEST MODE FOR CARRYING OUT THE INVENTION

According to the present invention, for accessing a desired network such as the Internet through a portable communication device such as a portable telephone, using a communication port originally provided with the electronic apparatus as a user interface, the electronic apparatus and the portable communication device can be matched in communication protocol with each other. Further, the difference in communication timings between the communication port of the electronic apparatus and the portable communication device can be absorbed so as to enable data communication by managing the electronic apparatus and the portable communication device equally.

### Specific Construction Example of Embodiment

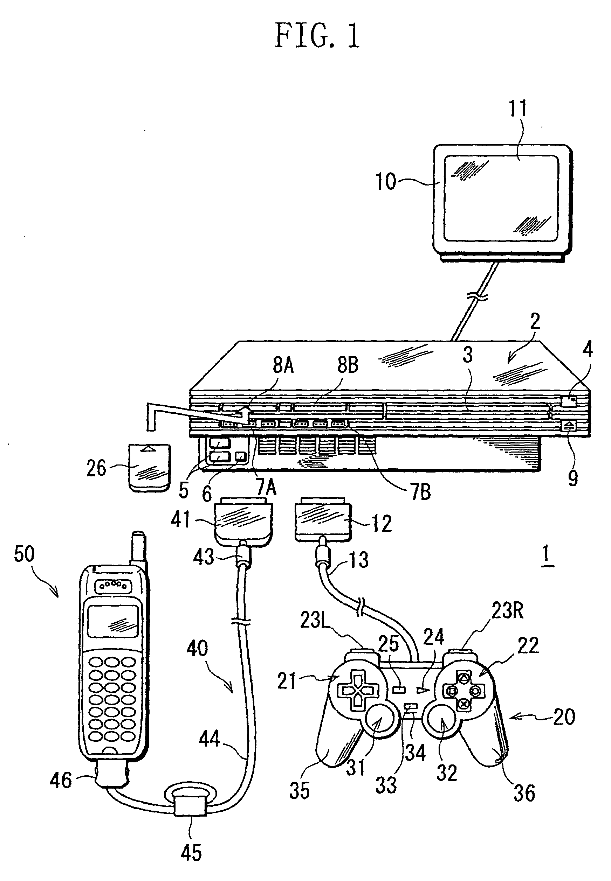

FIG. 1 illustrates a general construction of an entertainment system according to an embodiment of the present invention.

The entertainment system of this embodiment comprises a video game machine (entertainment device) 2 as an example of a desired electronic apparatus, a controller 20, and a television monitor 10. The video game machine 2 has functions of executing various video games, preparing and editing e-mails, perusing Web pages, playing movies and music, and so on. The controller 20 is an operation terminal connected with the video game machine 2 to be operated by a user (operator). The controller 20 is connected to a controller port 7 (7A or 7B) of the video game machine 2. The controller port 7 is a communication port originally provided as a user interface with the video game machine 2. The television monitor 10 is connected with the video game machine 2 to display game contents, e-mails, Web pages, movies, etc., and output sounds.

A connection cable 40 connects a portable telephone 50 as an example of a portable communication device and the video game machine 2 with each other. The connection cable 40 is connected to an external device connector of the portable telephone 50 and to a controller port 7 of the video game machine 2.

### Construction of Connection Cable

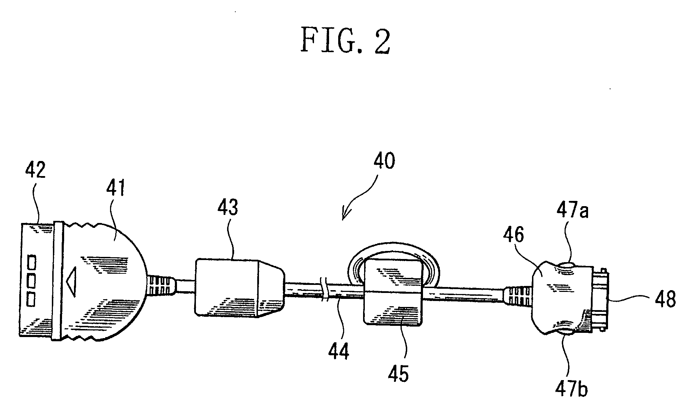

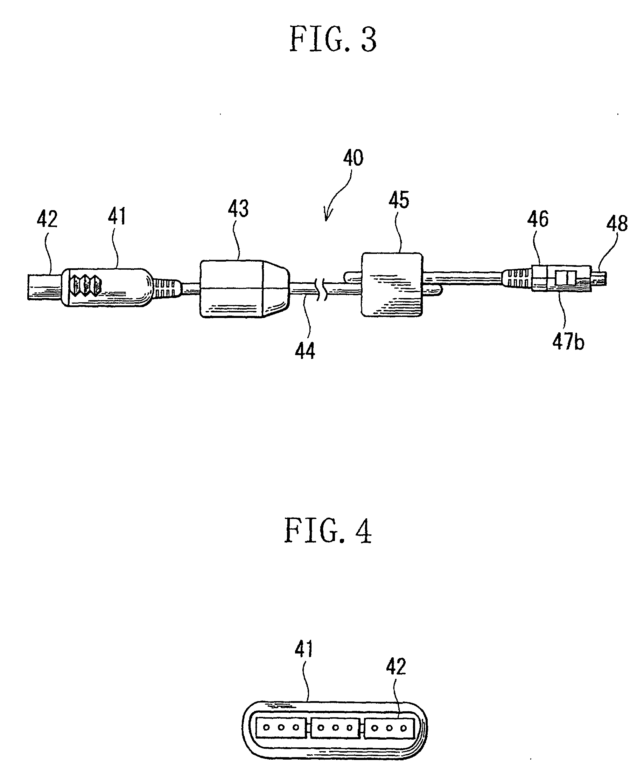

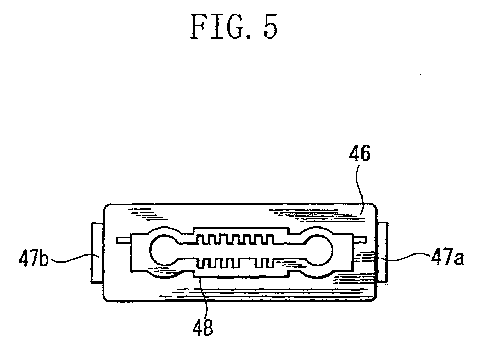

As illustrated in FIG. 1 and FIGS. 2 to 5, the connection cable 40 comprises a controller port connector 41 (hereinafter referred to as CP connector 41), a portable device connector (receptacle) 46 (hereinafter referred to as MP connector 46), and a cord 44 connecting the CP connector 41 and the MP connector 46 with each other. The CP connector 41 is connected to a controller port 7 of the video game machine 2. The MP connector 46 is connected to the external-device connector of the portable telephone 50. FIG. 3 is a view of the connection cable 40 from the lower side of the connection cable40 shown in FIG. 2. FIG. 4 is a view of from the left side of the CP connector 41 shown in FIG. 3. FIG. 5 is a view from the right side of the MP connector 46 shown in FIG. 3.

The CP connector 41 has a housing 42 to be inserted into the controller port 7. The CP connector 41 includes therein a terminal to be connected electrically with the controller port 7, and a circuit board which connects the terminal with the wires in the cord 44 and has a signal processing unit for communication protocol conversion and absorption of the difference in communication timings between the portable telephone 50 and the video game machine 2. The specific configuration and operation of the signal processing unit will be described later.

The MP connector 46 has a housing 48 to be inserted into the external device connector, and release buttons 47a and 47b to release a lock on the occasion of pulling out the MP connector 46 from the portable telephone 50. Further the MP connector 46 includes therein a terminal to be connected electrically with the external device connector, and a circuit board for connecting the terminal with the wires in the cord 44.

To the connection cable 40 attached are ferrite cores 43 and 45 for noise reduction in the respective vicinities of the CP connector 41 and MP connector 46. In particular, as for the ferrite core 45 in the vicinity of the MP connector 46 near to the portable telephone 50, the cord 44 is wound once around the ferrite core 45 to realize more effective noise reduction.

### General Configuration of Video Game Machine

The video game machine 2 is provided with memory card slots 8A and 8B, controller ports 7A and 7B, a disk tray 3, buttons 4 and 9, an IEEE (Institute of Electrical and Electronics Engineers) 1394 connector 6, a USB (Universal Serial Bus) connector 5, etc. The memory card slots 8A and 8B are constituted so that a memory card 26 can be inserted and pulled into/out of the memory card slots 8A and 8B. The controller ports 7A and 7B are constituted so that a connector 12 of a cable 13 of the controller 20 can be connected and disconnected with/from the controller ports 7A and 7B. An optical disk such as a DVD-ROM or CD-ROM can be loaded on the disk tray 3. The button 9 is an open/close button for opening/closing the disk tray 3. The button 4 is an on/standby/reset button for turning the power on, setting a standby mode, and resetting a game. Although not illustrated, the video game machine 2 is further provided on its rear side with a power switch, audio and video output terminals (AV multi output terminal), a PC card slot, an optical digital output terminal, an AC power input terminal, etc.

The video game machine 2 executes various processes for carrying out games, preparing, editing, and transmitting/receiving e-mails, perusing Web pages, etc., in accordance with application programs for the games, e-mails, and a Web browser, and operator's instructions through the controller 20. Application programs can be read out from a recording medium, that is optical disk such as a CD-ROM or DVD-ROM, or a semiconductor memory, and can be downloaded through a transmission medium such as a telephone line, a LAN, a CATV line, or a communication satellite line.

The memory card 26 attached to the memory card slot 8A or 8B is for storing (saving) various data, such as game data obtained in execution of a video game, e-mails transmitted/received or prepared through the portable telephone 50, e-mail addresses, the URLs (Uniform Resource Locators) of Web sites, registration information, passwords, etc, for connecting with various servers through, for example, the Internet. Saved game data is used for restarting the interrupted game or playing the sequel of the game.

The video game machine 2 can not only carry out games, prepare and edit e-mails, read Web pages, etc., according to the application programs, but also play back (decode), e.g., audio data recorded on a CD and video and audio data such as a movie recorded on a DVD. The video game machine 2 can operate according to various application programs other than the above. The driver program for playing DVDs is stored in a memory card 26.

### General Construction of Controller

The controller 20 is provided with a left grip 35, a right grip 36, a left operation area 21, a right operation area 22, a left analogue operation unit 31, a right analogue operation unit 32, a first left depression button 23L, a not-illustrated second left depression button, a first right depression button 23R, a not-illustrated second right depression button, etc. The left grip 35 is a part to be held by the user's left palm. The right grip 36 is a part to be held by the user's right palm. The left and right operation areas 21 and 22 are the parts operated by the user's left and right thumbs, respectively, in a state that both grips 35, 36 are gripped by the left and right hands. The left and right analogue operation units 31 and 32 are the parts where analog operations (joystick operations) are effected by the player's left and right thumbs, respectively, in a state that both grips 35, 36 are gripped by the left and right hands. The first left depression button 23L and the not-illustrated second left depression button disposed below the first left depression button 23L can be operated by, e.g., the forefinger and middle finger of the operator's left hand, respectively. The first right depression button 23R and the not-illustrated second right depression button disposed below the first right depression button 23R can be operated by, e.g., the forefinger and middle finger of the operator's right hand, respectively.

The left operation area 21 is provided with "up" "down" "left" and "right" directional keys operated by the operator when, e.g., moving a game character on a video game screen upward, downward, leftward and rightward, moving a letter input cursor on an e-mail preparing screen upward, downward, leftward and rightward, scrolling a Web page being perused, or moving a letter input cursor on a screen upward, downward, leftward and rightward. Besides, these "up" "down" "left" and "right" directional keys can be used for moving the game character or cursor not only vertically or horizontally but also obliquely. So that the operator can issue a moving instruction to obliquely right upward direction to the video game machine 2 by pressing the "up" directional key together with the "right" directional key. The same will apply to the other directional keys, and the operator can issue an moving instruction to obliquely left downward direction to the video game machine 2 by pressing the "down" directional key together with the "left" directional key.

The right operation area 22 is provided with four instruction buttons ("Δ", "□", "X" and "○" buttons, all of which are engraved with the shape of "Δ", "D", "X" and "○" respectively), which are assigned with various functions different from each other by game application programs. For example, the "Δ" button is assigned with a function for demanding menu display, "X" button with a function for canceling selected items, "○" button with a function for determining selected items, and "□" button with a function for designating display/non-display of, for example, the table of contents.

The left analog operation unit 31 and the right analog operation unit 32 respectively have a rotary operational element which can be declined into an arbitrary direction around a supporting point of the axis of operation, and a variable analog value output means for outputting variable analog values corresponded to the operation of the rotary operational element. The rotary operational element is attached to the top end of the axis of operation which is designed to return to the neutral position with the aid of an elastic member. When not operated to incline by the operator, the rotary operational element keeps an upright posture (not-inclined posture) and remains in such position (standard position). The variable analog value output means has a variable resistor element. The variable resistor element change the resistivity value of itself depending on the operation of the rotary operational element. When the rotary operational element of the left analog operation unit 31 or right analog operation unit 32 is inclined for operation, a coordinate value on an X-Y coordinate is detected based on the amount and direction of the inclination from the standard position, and the coordinate value is supplied as an operational output signal to the video game machine 2.

The controller 20 is provided with a mode selection switch 33, a light indicator 34, a select button 25, a start button 24, etc. The mode selection switch 33 is for selecting an operation mode, i.e., making the left and right operation areas 21 and 22 and the left and right analogue operation units 31 and 32 active (analogue operation mode) or inactive (digital operation mode). The light indicator 34 comprises an LED (Light Emitting Diode) or the like for informing the player of the selected operation mode. The start button 24 is used, e.g., when the operator instructs the video game machine 2 to start a game, a display of an e-mail screen, or a play of a movie or music, or pause the play of the movie or music. The select button 25 is used, e.g., when the operator instructs the video game machine 2 to display a menu or an operation panel on the monitor screen 11. When the analogue operation mode is selected through the mode selection switch 33, the light indicator 34 is turned on and the left and right analogue operation units 31 and 32 become active. When the digital operation mode is selected, the light indicator 34 is turned off and the left and right analogue operation units 31 and 32 become inactive.

When the operator operates any one of the buttons and operation units on the controller 20, the controller 20 generates an operation signal in accordance with the operation and sends the operation signal to the video game machine 2 through the cable 13.

The controller 20 is also provided with a vibration generation mechanism within the left and right grips 35, 36. The vibration generation mechanism has a weight decentered in respect of the axis of rotation of a motor, and rotating such weight using the motor can generate vibration of the controller 20. The vibration generation mechanism is activated in accordance with the instruction from the video game machine 2. The controller 20 transmits vibration to the operator's hands through activating the vibration generation mechanism.

### Internal configuration of Video Game Machine

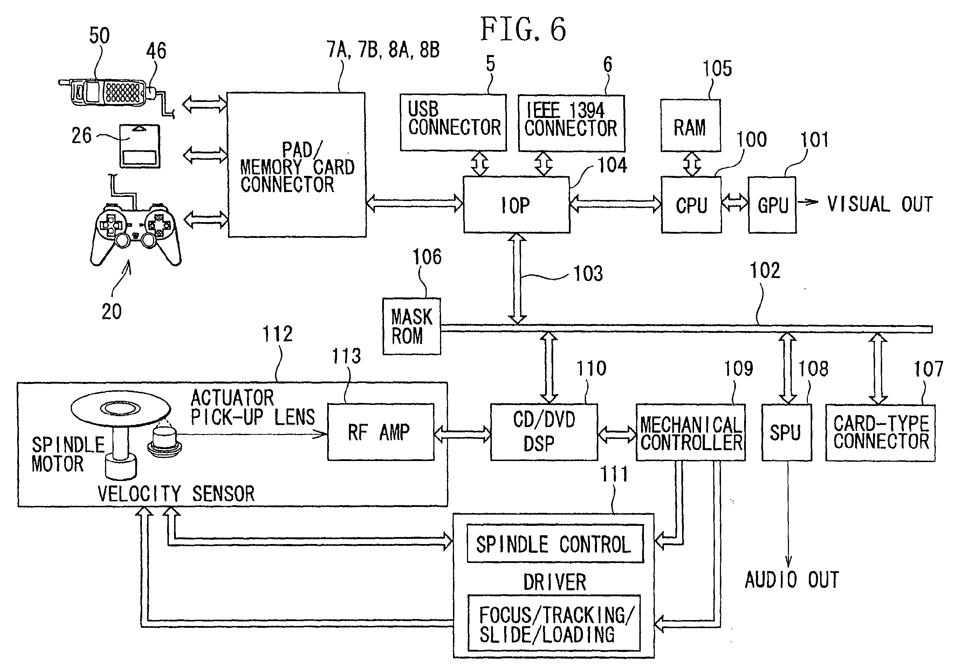

A general internal circuit configuration of the video game machine 2 will be described next with reference to FIG. 6.

The video game machine 2 includes, as its principal components, a main CPU 100, a graphic processor unit (GPU) 101, an IO processor (IOP) 104, an optical disk reproduction unit 112, a main memory 105, a MASK ROM 106, a sound processor unit (SPU) 108. The main CPU 100 performs signal processing and control of various internal components based on various programs such as application programs for games, e-mails, and a Web browser. The GPU 101 performs image processing. The IOP 104 performs interface processing or processing for keeping lower compatibility, between external devices and the internal component of the machine. The optical disk reproduction unit 112 is for reproducing an optical disk such as a DVD or CD having recorded therein an application program or multimedia data. The main memory 105 serves as a buffer for temporarily storing data read out from a work area of the main CPU 100 or an optical disk. The MASK ROM 106 stores therein operating system programs to be executed mainly by the main CPU 100 and IOP 104. The SPU 108 performs audio signal processing.

The video game machine 2 is further provided with a CD/DVD digital signal processor (DSP) 110, a driver 111, a mechanical controller 109, and a card-type connector (PC card slot) 107. The DSP 110 performs, e.g., error correction processing (CIRC processing), expansion decoding processing, and so on, to a disk reproduction signal read out from a CD or DVD by the optical disk reproduction unit 112 and then amplified by an RF amplifier 113, thereby reproducing (reconstructing) data recorded on the CD or DVD. The driver 111 and the mechanical controller 109 perform rotation control of a spindle motor of the optical disk reproduction unit 112, focus/tracking control of an optical pickup, loading control of a disk tray, etc. The card-type connector 107 is a connection port for a communication card, an external hard disk drive, or the like.

These components are connected with each other mainly through bus lines 102 and 103. The main CPU 100 and the GPU 101 are connected with each other through a dedicated bus line. Besides, the main CPU 100 and the IOP 104 are connected with each other through an SBUS. The IOP 104 and the DSP 110, the MASK ROM 106, the sound processor unit 108, and the card-type connector 107 are connected with each other through the SBUS.

The main CPU 100 executes an operating system program for main CPU stored in the MASK ROM 106 to control the entire operation of the video game machine 2. Besides, the main CPU 100 executes various application programs read out from optical discs such as CD-ROMs or DVD-ROMs and loaded into the main memory 105, or downloaded through a communication network, to control operations for playing a game, preparing or editing an e-mail, perusing a Web page, etc.

The IOP 104 executes an operating system program for IO processor stored in the MASK ROM 106 to control input/output of data to/from the memory card 26 which stores therein the setting of signals and games according to the operation by operator through the controller 20, the contents and addresses of e-mails, the URLs of Web sites, or the like. Further, the IOP 104 controls data input/output at the USB connector 5, IEEE 1394 connector 6, the not-illustrated PC card slot, and so on.

The GPU 101 has a function of a geometry transfer engine for coordinate conversion and so on, and a function of a rendering processor. The GPU 101 draws an image according to rendering instructions from the main CPU 100 and the stores the drawn image into a not-illustrated frame buffer. More specifically, in the case that various application programs stored in an optical disk uses so called three-dimensional (3D) graphics as a video game does, the GPU 101 performs, by a geometry operation process, calculation for the coordinates of polygons to constitute a three-dimensional object. Further, the GPU 101 performs, by a rendering process, various calculations to make an image that may be obtained by shooting the three-dimensional object by a virtual camera, i.e., the GPU 101 performs a perspective conversion (calculation of the coordinate values when the vertexes of each polygon constituting the three-dimensional object are projected on a virtual camera screen, and so on). The GPU 101 finally writes the obtained image data into the frame buffer. The GPU 101 then outputs a video signal corresponding to the thus drawn image.

The SPU 108 has an ADPCM (Adaptive Differential Pulse Code Modulation) decoding function, an audio signal reproducing function, a signal modulating function, etc. The ADPCM decoding function is a function of decoding sound data that has been encoded through an adaptive predictive coding process. The audio signal reproducing function is a function of reading out waveform data from a not-illustrated sound buffer incorporated in or externally connected with the SPU 108, to reproduce and output an audio signal for, e.g., sound effect. The signal modulating function is a function of modulating waveform data stored in the sound buffer to produce various sound waveform data. More specifically, the SPU 108 also serves as a sampling sound source for producing audio signals for a music sound, a sound effect, or the like, using waveform data stored in the sound buffer, following instructions of the main CPU 100.

When the video game machine 2 constructed as described above is powered on, for example, the operating system programs for main CPU and IOP are read out from the MASK ROM 106. The main CPU 100 and the IOP 104 execute the corresponding operating system program respectively. By the execution of the operating system program, the main CPU 100 controls each component of the video game machine 2 as a whole. The IOP 104 controls signal input/output between the controller 20, a memory card 26, or the like, and the video game machine 2. Besides, by the execution of the operating system program, the main CPU 100 performs initialization such as operation check and so on, and then controls the optical disk reproduction unit 112 to read out an application program for a game or the like from an optical disk. After loading the application program in the main memory 105, the main CPU 100 executes the game application program. By the execution of the application program, the main CPU 100 controls the GPU 101 and the SPU 108 following operator's instructions received from the controller 20 through the IOP 104 to control image display and production of a sound effect or a music sound. In the case that the video game machine reproduces, e.g., a movie recorded in an optical disk, the main CPU 100 controls the GPU 101 and the SPU 108 following operator's instructions (commands) received from the controller 20 through the IOP 104 to control image display and production of a sound effect or a music sound of the movie reproduced from the optical disk.

### Outline of Signal Transmitting/receiving

Next, signals to be transmitted/received through the external-device connector (receptacle) of the portable telephone 50 and signals to be transmitted/received through a controller port 7 of the video game machine 2 will be described.

### Signal Transmitting/receiving of Potable Telephone

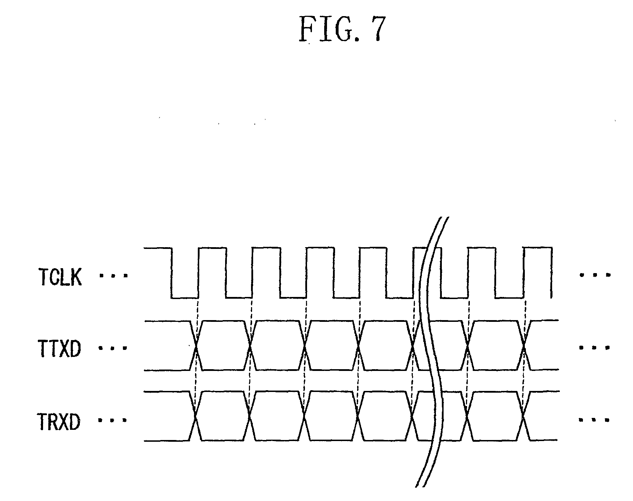

Signal transmitting/receiving through the external-device connector (receptacle) of the portable telephone 50 will be described with reference to FIGS. 7 to 9.

For data communications with a base station of a portable telephone network, the portable telephone 50 uses a system in which PDC system has been extended for packet communications. The portable telephone 50 receives a signal sent from the base station through a packet communication as a receiving signal TRXD, and then outputs the receiving signal TRXD through the external-device connector. Besides, the portable telephone 50 receives a signal externally sent to the external-device connector as a transmitting signal TTXD, and then transmits the transmitting signal TTXD to the base station of the portable telephone network through a packet communication.

When the portable telephone 50 outputs, from the external-device connector, a signal sent from the base station of the portable telephone network through a packet communication, the portable telephone 50 outputs a clock signal TCLK of, e.g., 42 kHz, indicating timings for receiving the signal, together with the receiving signal TRXD.

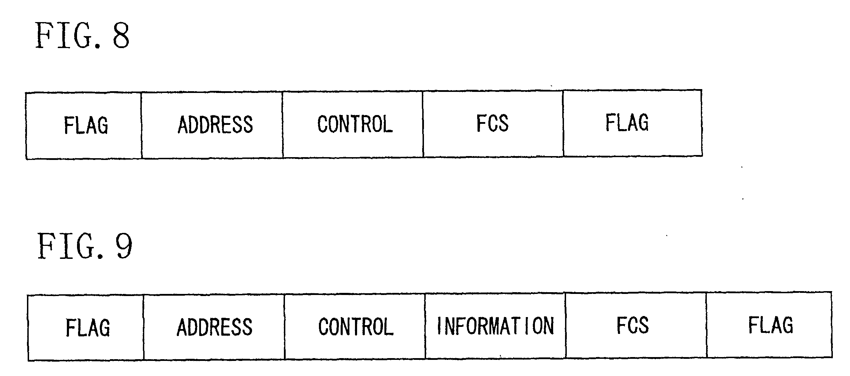

In the case that the signal to be transmitted/received represents a command, its frame is constituted by a flag, address data, control data, an FCS (Frame Check Sequence), and a flag, as illustrated in FIG. 8. In the case that the signal to be transmitted/received represents response data to a command, its one frame is constituted by a flag, address data, control data, information, an FSC, and a flag, as illustrated in FIG. 9. Each flag is for indicating the break in frames. When the signal represents a command, the address data indicates that the signal is the command. When the signal represents a response data, the address data indicates that the signal is the response. Control data indicates a command number within the frame in the case of a command, and a frame number within the frame in the case of a response. FCS is the data for error detection. Information represents actual data to be actually transmitted/received. In the case of a command, its length is fixed. In the case of response data, its length is variable and determined by its head and tail flags.

### Transmitting/receiving Signal between Video Game Machine and Controller

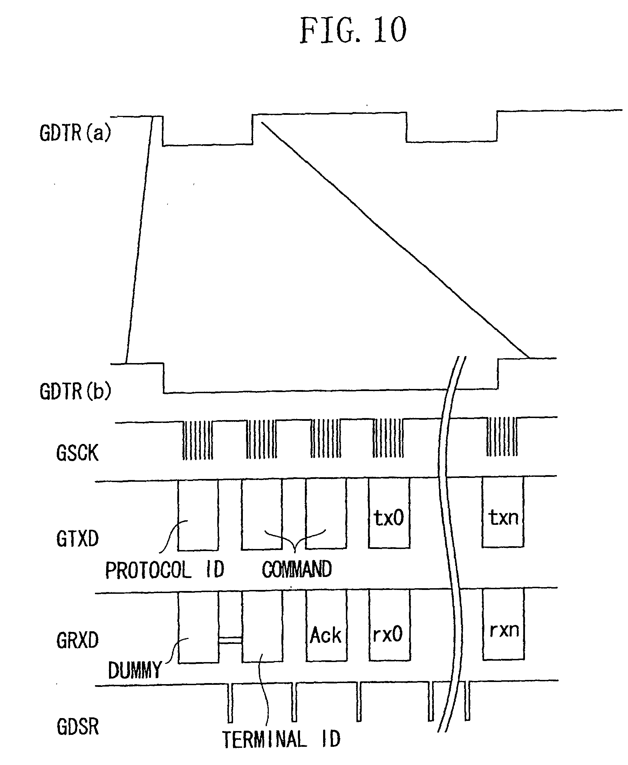

Signal transmitting/receiving through a controller port 7 of the video game machine 2 are performed at timings as illustrated in FIG. 10. In FIG. 10, GDTR(b) is an enlarged form of GDTR(a).

The controller port 7 is provided on the video game machine 2 originally for data communications with the controller 20. The video game machine 2 receives a signal sent from the controller 20 as a receiving signal GRXD. The controller 20 receives a transmitting signal GTXD sent from the video game machine 2.

Data transmitting/receiving between the video game machine 2 and the controller 20 are done only when an input ready signal GDTR in predetermined cycles (corresponding to vertical synchronization of a video signal) is at its "L" level, which indicates that a data communication is possible. More specifically, the controller 20 asserts a transmitting/receiving ready signal GDSR indicating that the preparation for transmitting/receiving has been completed, to inform the video game machine 2 of that effect. After this, the controller 20 latches (receives) a transmitting signal GTXD at the timing of the start-up of a data transfer clock signal GSCK transmitted from the video game machine 2. The video game machine 2 latches a receiving signal GRXD at the timing of the start-up of the clock signal GSCK.

The transmitting signal GTXD is constituted by a protocol ID, a command code, and a plurality of communication data tx0 to txn. The receiving signal GRXD is constituted by dummy data, a terminal ID, an acknowledge Ack, and a plurality of receiving data rx0 to rxn. The protocol ID of the transmitting signal GTXD is an ID for indicating the kind of the device connected to the controller port 7 (i.e., an ID for indicating the kind of communication protocol). The terminal ID of the receiving signal GRXD is an ID for identifying the various kinds of devices connected to the controller port 7.

### Point to Notice When Video Game Machine and Portable Telephone are Connected with Each Other

If the signal transmitting/receiving through the external-device connector of the portable telephone 50, described with reference to FIGS. 7 to 9, is compared with the signal transmitting/receiving between the video game machine 2 and the controller 20, described with reference to FIG. 10, the signal transmitting/receiving through the external-device connector of the portable telephone 50 are intermittently performed at timings of the clock signal TCLK in predetermined first cycles. On the other hand, the signal transmitting/receiving through the controller port 7 of the video game machine 2 are performed only when the input ready signal GDTR in predetermined second cycles different from the first cycles is at its "L" level. Besides, the latter signal transmitting/receiving are performed through full duplex synchronous serial communications.

That is, there is a difference in communication timings between the signal transmitting/receiving through the external-device connector of the portable telephone 50 and the signal transmitting/receiving through the controller port 7 of the video game machine 2. More specifically, the signal transmitting/receiving through the controller port 7 of the video game machine 2 are performed according to the input ready signal GDTR corresponding to vertical synchronization of a video signal. On the other hand, the signal transmitting/receiving through the external-device connector of the portable telephone 50 require a continuous communication in the predetermined first cycles. Thus, there is a difference in communication timings therebetween.

Besides, the communication protocol for the signal transmitting/receiving through the external-device connector of the portable telephone 50 is different from that for the signal transmitting/receiving through the controller port 7 of the video game machine 2.

Further, a device other than the controller 20 or the connection cable 40 can be connected to the controller port 7 of the video game machine 2. Therefore there is a need to avoid communication interference due to the connected device.

When the portable telephone 50 is connected with the video game machine 2 through a controller port 7, data to be actually transmitted/received therebetween is the control data and information (actual data) of FIG. 9.

Therefore, the interface means for realizing data communications between the external-device connector of the portable telephone 50 and the controller port 7 of the video game machine 2 must perform extraction of the control data and information (actual data) actually transmitted/received, conversion of communication protocol, avoidance of communication interference, and absorption of the difference in communication timings.

### Construction and Operation of Connection Cable (Signal Processing Unit)

The connection cable 40 connecting the external-device connector with the controller port 7 serves for extraction of the control data and information (actual data) actually transmitted/received, conversion of communication protocol, avoidance of communication interference, and absorption of the difference in communication timings.

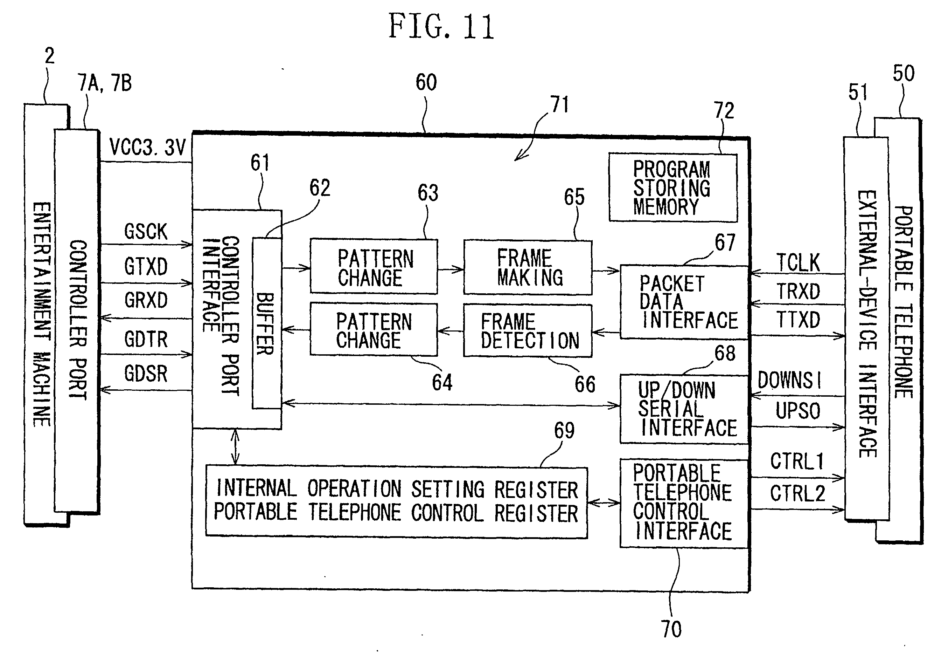

The CP connector 41 of the connection cable 40 includes therein a signal processing unit 60 as illustrated in FIG. 11. The signal processing unit 60 performs extraction of the control data and information (actual data) actually transmitted/received, conversion of communication protocol, avoidance of communication interference, and absorption of the difference in communication timings.

The signal processing unit 60 includes, as its principal components, a controller port interface unit 61 (hereinafter referred to as CIF unit 61) including a buffer memory 62 for temporarily storing communication data; pattern changing units 63 and 64; a frame making unit 65; a frame detection unit 66; a packet data interface unit 67 (hereinafter referred to as PIF unit 67); an up/down serial interface unit 68 (hereinafter referred to as SIF unit 68); a register unit 69; and a portable telephone control interface unit 70 (hereinafter referred to as MIF unit 70). These components are constituted by logic circuits or the like of a microcomputer 71 and the peripheral circuit of the microcomputer 71, and mounted on a circuit board in the CP connector 41. The microcomputer 71 executes the operations corresponding to the respective components, based on a data communication program stored in a memory 72. In other words, each component of the signal processing unit 60 illustrated in FIG. 11 corresponds to the respective process steps of the data communication program executed by the microcomputer 71.

The signal processing unit 60 is connected with an external-device interface unit 51 (hereinafter referred to as AIF unit 51) of the portable telephone 50 through the cord 44 and the MP connector 46 (not illustrated in FIG. 11), and connected with a controller port 7 of the video game machine 2 through the cord 44.

The clock signal GSCK, transmitting signal GTXD, and input ready signal GDTR, described with reference to FIG. 10, are input from the controller port 7 of the video game machine 2 to the CIF unit 61. On the other hand, the receiving signal GRXD and transmitting/receiving ready signal GDSR are output from the CIF unit 61 to the controller port 7.

The clock signal TCLK and receiving signal TRXD, described with reference to FIG. 7, are input from the AIF unit 51 of the portable telephone 50 to the PIF unit 67. The transmitting signal TTXD is output from the PIF unit 67 to the AIF unit 51.

When the receiving signal TRXD received from the AIF unit 51 of the portable telephone 50 is sent to the controller port 7 of the video game machine 2, the signal processing unit 60 executes the following process.

First, the PIF unit 67 receives the receiving signal TRXD sent from the portable telephone 50 through the AIF unit 51 at the timing of falling edge of the clock signal TCLK, and then sends the received signal to the frame detection unit 66.

The frame detection unit 66 detects a flag described with reference to FIG. 9 in the receiving signal TRXD sent from the PIF unit 67 so as to extract a frame. The frame detection unit 66 then sends the extracted frame to the pattern changing unit 64.

In order to prevent the data in the frame from having the same bit pattern as the flag, when the same bit pattern as the flag has come, the pattern changing unit 64 changes the bit pattern into another pattern. Data output from the pattern changing unit 64 is sent to the CIF unit 61.

The CIF unit 61 then accumulates the data transmitted from the pattern changing unit 64 in the buffer memory 62, and converts (protocol conversion) it into a signal receivable by the video game machine 2, as described with reference to FIG. 10. When preparations for transmitting/receiving have been completed, the CIF unit 61 asserts a transmitting/receiving ready signal GDSR and inform the signal to the video game machine 2.

Next, when the input ready signal GDTR sent from the video game machine 2 is at its "L" level, the CIF unit 61 reads out the signal after the protocol conversion from the buffer memory 62 at timings of the clock signal GSCK, and then outputs the read-out signal to the controller 7 side. If the data received from the portable telephone 50 is longer than the "L" level of the input ready signal GDTR, the CIF unit 61 divides the data into a plurality of data pieces, and separately sends the data pieces a plurality of times to the video game machine with information indicating that those data pieces constitute a series of data.

When the transmitting signal GTXD received from the controller port 7 of the video game machine 2 is sent to the AIF unit 51 of the portable telephone 50, the signal processing unit 60 executes the following process.

In this case, the CIF unit 61 receives the transmitting signal GTXD sent from the controller port 7 at the timing of rising edge of the clock signal GSCK when the input ready signal GDTR is at its "L" level. The CIF unit 61 then converts the protocol of the received signal into a signal receivable by the portable telephone 50, as described with reference to FIGS. 7 to 9, and sends the signal to the pattern changing unit 63.

When the pattern changing unit 63 detects a bit pattern equal to the pattern changed by the pattern changing unit 64 in the data received from the CIF unit 61, the pattern changing unit 63 changes the detected bit pattern into a flag bit pattern. Data output from this pattern changing unit 63 is sent to the frame making unit 65.

The frame making unit 65 uses the data received from the pattern changing unit 63 to make a frame as described with reference to FIG. 9 and sends the frame data to the PIF unit 67.

The PIF unit 67 receives the frame data sent from the frame making unit 65, at the timing of falling edge of the clock signal TCLK, and then sends the received signal to the AIF unit 51 as a transmitting signal TTXD.

Above described are fundamental operations of the signal processing unit 60 for data communications between the external-device connector of the portable telephone 50 and the controller port 7 of the video game machine 2.

Note that processes of communication protocol conversion and matching communication timings for the data communication between the signal processing unit 60 and the video game machine 2 can be performed within the video game machine 2. In this case, for example, the IOP 104 or CPU 100 in the video game machine 2 executes a data communication program for the processes of communication protocol conversion and matching communication timings. The data communication program is provided from a recording medium such as an optical disk or a memory card 26, or is stored beforehand in, e.g., the MASK ROM 106.

The SIF unit 68 serves for inputting/outputting up serial data UPSO and down serial data DOWNSI which are based on RS-232C and used to communicate a microcomputer in the portable telephone 50. The CIF unit 61 absorbs the difference in communication timings between the up and down serial data UPSO and DOWNSI and send them to the video game machine 2. The up and down serial data UPSO and DOWNSI represent, e.g., address data of an e-mail.

The register unit 69 holds therein various states, e.g., a power condition of the portable telephone 50 connected through its AIF unit 51 (whether the power is on or off), a connector condition of the connection cable 40 (whether the connector is disconnected or connected), etc. The register unit 69 further holds therein a set value of baud rate for up/down serial data and for the operation unit such as 10-key of the portable telephone 50, etc. Out of the values being held in the register unit 69, the set values for the operation unit of the portable telephone 50 are sent to the portable telephone 50 through the MIF unit 70 as control signals CTRL1 and CTRL2.

The portable telephone 50 also sends the information indicating radio wave receiving conditions to the video game machine 2. The video game machine 2 controls the power of the portable telephone 50.

### Specification of Protocol for Connection Cable

Next, commands to be used between the video game machine 2 and the connection cable 40 will be described. The commands commands to be used between the video game machine 2 and the connection cable 40 are as follows. As for commands to be used between the portable telephone 50 and the connection cable 40, those originally defined by a portable telephone service are used, so the description thereof will be omitted here.

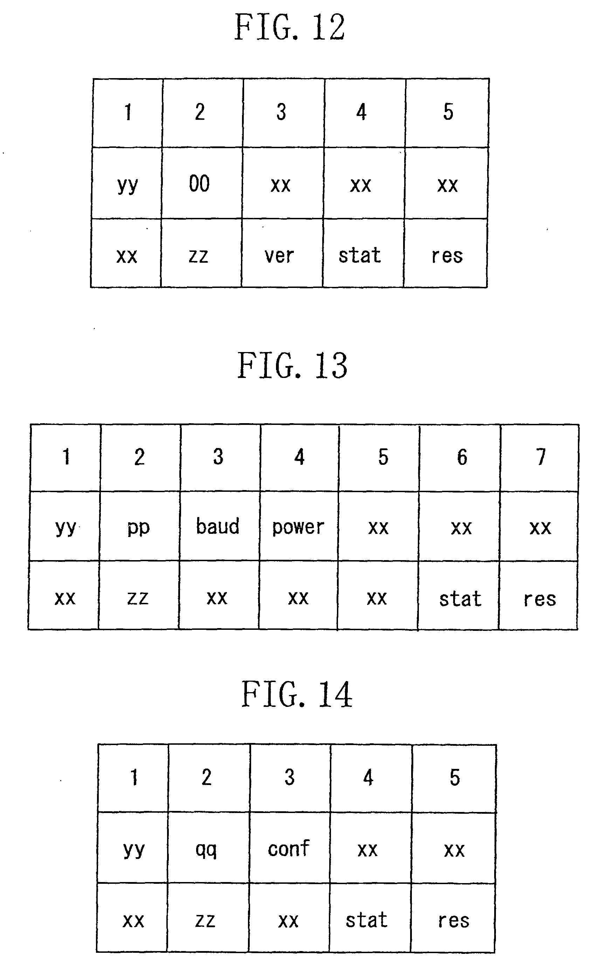

There are various kinds of commands to be used between the video game machine 2 and the connection cable 40. In the commands shown in FIGS. 12 to 19, the first byte "yy" indicates that the device connected to the controller port 7 is the connection cable 40. The second bytes "oo", "pp", "qq", "rr", "ss", "tt", "uu", and "vv" indicate the kind of the respective commands. Each command illustrated in FIGS. 12 to 19 is the value expressed by hexadecimal notation. The value represented by alphabets "xx" means it can take any value. Each value represented by the other lower-case alphabets and numerals ("stat", "ttx0", etc.) means it can take any value out of some kinds of values. In the commands illustrated in FIGS. 12 to 19, the last byte "res" represents reservation. The second last byte "stat" represents a connection state of a connector of the connection cable 40. These commands will be described below in order.

FIG. 12 illustrates region code commands. In FIG. 12, "ver" indicates the version of the firmware of the connection cable 40.

FIG. 13 illustrates control commands for the CPU chip incorporated in the portable telephone 50. In FIG. 13, "baud" is used for selection of a baud rate for the up/down serial data as described above. When a request for changing the baud rate has come during transmitting/receiving up/down serial data described above, the portable telephone 50 changes the baud rate after completion of the transmitting/receiving of the data. "power" indicates one of the control signals CTRL1 and CTRL2 for the power / key inactivation of the portable telephone 50, and the values representing presence/absence of a unit of the portable telephone 50.

FIG. 14 illustrates connector insertion check commands. In FIG. 14, "conf" indicates the object (connector) to be checked.

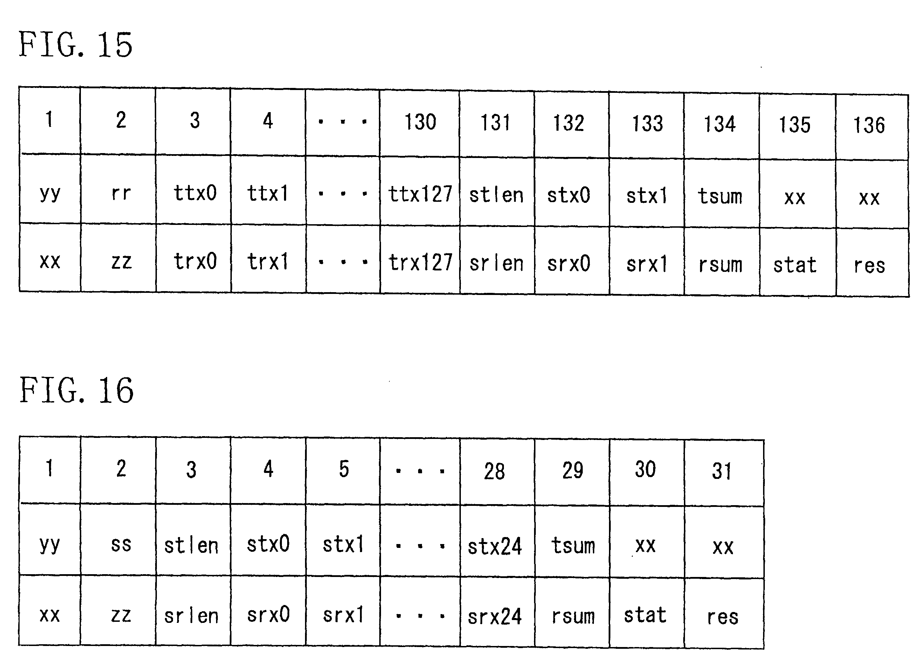

FIG. 15 illustrates commands to be transmitted to/received from the CPU in the portable telephone 50. These commands have a fixed length (the number of bytes is fixed). "ttx0" to "ttx127" represent data to be transmitted/received without any change between the signal processing unit 60 of the connection cable 40 and the video game machine 2. "stlen" and "srlen" indicate the number of effective bytes in the respective up and down serial data. "ttx0" to "ttx127", "trx0" to "trx127", "stx0" and "stx1", and "srx0" and "srx1" represent data to be transmitted/received. "tsum" represents the sum of the exclusive-OR values between all transmission data and "stlen" and "rsum" represents the sum of the exclusive-OR values between all reception data and "srlen".

FIG. 16 illustrates commands to be transmitted/received as up/down serial data from the CPU in the portable telephone 50. These commands have a fixed length (the number of bytes is fixed) . "stlen" and "srlen" indicate the number of effective bytes of the transmitting/receiving data. "tsum" represents the sum of the exclusive-OR values between all communication data and "stlen" and "rsum" represents the sum of the exclusive-OR values between all reception data and "srlen".

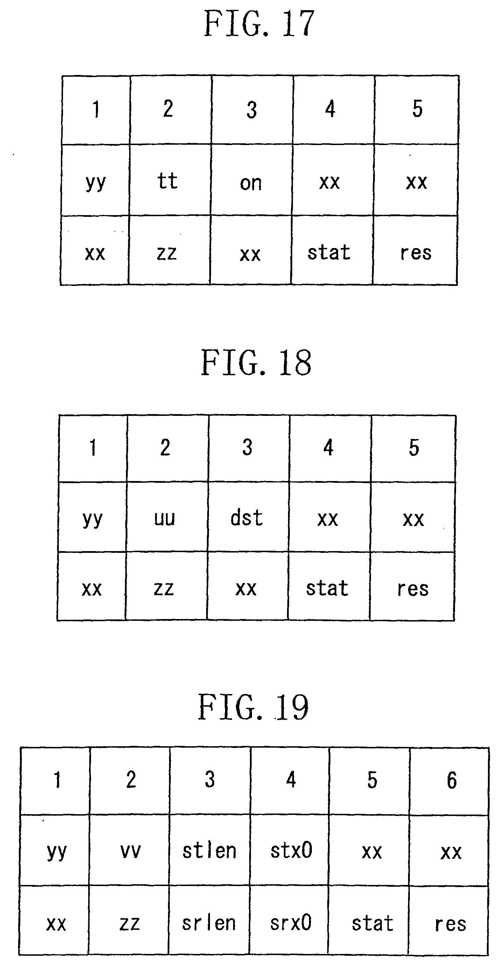

FIG. 17 illustrates commands to be used for turning ON/OFF the mode of a communication protocol in a data link layer used as a data transfer procedure in the case of a packet communication through a public packet communication network or the like. In FIG. 17, "on" indicates ON/OFF mode of the communication protocol.

FIG. 18 illustrates commands for resetting the signal processing unit 60 of the connection cable 40 and clearing the buffer memory 62. In FIG. 18, "dst" indicates reset of the signal processing unit 60 and clear of the buffer memory 62.

FIG. 19 illustrates commands for transmitting/receiving up/down serial data. These commands have a fixed length (the number of bytes is fixed). In FIG. 19, "stlen" and "srlen" indicate the numbers of effective byte of the transmitting/receiving data.

As described above, the connection cable 40 can match the communication protocol for the controller port 7 of the video game machine 2 and the communication protocol for external devices for the portable telephone 50 with each other. Besides, the connection cable 40 absorbs the difference between the communication timings of the controller port 7 of the video game machine 2 and the communication timings for external devices of the portable telephone 50 so as to manage the video game machine 2 and the portable telephone 50 equally for realization of a data communication.

It is of course that the present invention is not limited to the above-described embodiment and various changes and modifications can be made without departing from the technical scope of the invention defined in the appended claims. For example, the present invention is not limited to the video game machine 2 and the portable telephone 50 as described in the above embodiment, and communication protocols and commands are also not limited to those described in the above embodiment.

### INDUSTRIAL APLICABILITY

The present invention can be applied to data transmission devices or the like which control communication protocols and communication timings between specific electronic apparatus and a portable communication devices so as to realize communications between the electronic apparatus and the portable communication devices.

## Claims

1. A data communication device comprising:
a first data receiving unit, that receives first communication data externally supplied in first communication cycles using a first communication protocol;
a first data accumulating unit, that accumulates the first communication data; and
a first communication data converting unit, that converts the accumulated first communication data into second communication data by a second communication protocol.

2. The data communication device according to claim 1, wherein
the first data receiving unit receives the externally supplied first communication data in accordance with a first clock signal externally supplied together with the first communication data, and
the first communication data converting unit reads out the accumulated first communication data in accordance with a second clock signal.

3. The data communication device according to claim 1 or 2, further comprising:
a data transmitting unit, that transmits the second communication data based on an externally supplied signal for indicating second communication cycles.

4. The data communication device according to any one of claims 1 to 3, further comprising:
a second communication data receiving unit, that receives third communication data externally supplied using the second communication protocol, in accordance with the second clock signal externally supplied together with the third communication data;
a second communication data accumulating unit, that accumulates the third communication data; and
a second communication data converting unit, that reads out the accumulated third communication data serially in accordance with the first clock signal externally supplied and converts the third communication data into fourth communication data by the first communication protocol.

5. The data communication device according to any one of claim 1 to 4, further comprising:
an extraction unit, that detects a flag of a fixed bit pattern included in the first communication data when the first communication data is received, and then extracts the first communication data based on the flag.

6. The data communication device according to claim 5, further comprising:
a first pattern changing unit, that changes a pattern of the first communication data in accordance with a predetermined rule when the first communication data is received.

7. The data communication device according to claim 4, further comprising:
a second pattern changing unit, that changes a pattern of the third communication data in accordance with a predetermined rule when the third communication data is received.

8. The data communication device according to claim 3, wherein the first communication data converting unit divides the first communication data into data pieces in the case that the first communication data is longer than the externally supplied second communication cycles, and then adds information indicating that the data pieces constitute a series of data to the respective data pieces.

9. The data communication device according to any one of claims 1 to 8, wherein
the first communication protocol is a communication protocol of a predetermined portable communication terminal and,
the second communication protocol is a connection port communication protocol of a predetermined electronic apparatus.

10. The data communication device according to any one of claim 1 to 8, wherein
the first communication protocol is a connection port communication protocol of a predetermined electronic apparatus and,
the second communication protocol is a communication protocol of a predetermined portable communication terminal.

11. A data communication system comprising:
a first data communication device that transmits/receives first serial communication data in first communication cycles using a first communication protocol, and outputs at least a first clock signal simultaneously with the transmission of the first communication data;
a second data communication device that transmits/receives second communication data in second communication cycles using a second communication protocol, and outputs at least a second clock signal simultaneously with the transmission of the second communication data; and
a third data communication device that receives the first communication data supplied from the first data communication device, accumulates the received first communication data, reads out the accumulated first communication data in accordance with the second clock signal supplied from the second data communication device, converts the first communication data into the second communication data by the second communication protocol, and then transmits the second communication data to the second data communication device.

12. A data communication method comprising the steps of:
receiving first communication data supplied serially in first communication cycles using a first communication protocol;
accumulating the first communication data; and
converting the accumulated first communication data into second communication data by a second communication protocol.

13. A data communication method comprising the steps of:
receiving first communication data externally supplied using a first communication protocol, in accordance with a first clock signal externally supplied together with the first communication data;
accumulating the first communication data; and
reading out the accumulated first communication data serially in accordance with a second clock signal externally supplied, then converting the first communication data into second communication data by a second communication protocol.

14. A computer-readable recording medium having recorded therein a data communication program to be executed on a computer, wherein the data communication program comprising the steps of:
receiving first communication data externally and serially supplied in first communication cycles using a first communication protocol;
accumulating the first communication data; and
converting the accumulated first communication data into second communication data by a second communication protocol.

15. A computer-readable recording medium having recorded therein a data communication program to be executed on a computer, wherein the data communication program comprising the steps of:
receiving first communication data externally supplied using a first communication protocol in accordance with a first clock signal externally supplied together with the first communication data;
accumulating the first communication data; and
reading out the accumulated first communication data serially in accordance with a second clock signal externally supplied, then converting the first communication data into second communication data by a second communication protocol.

16. A data communication program to be executed on a computer, comprising the steps of:
receiving first communication data externally and serially supplied in first communication cycles using a first communication protocol;
accumulating the first communication data; and
converting the accumulated first communication data into second communication data by a second communication protocol.

17. A data communication program to be executed on a computer, comprising the steps of:
receiving first communication data externally supplied using a first communication protocol, in accordance with a first clock signal externally supplied together with the first communication data;
accumulating the first communication data; and
reading out the accumulated first communication data in accordance with a second clock signal externally supplied, then converting the first communication data into second communication data by a second communication protocol.
